(19) Europäisches Patentamt
European Patent Office
Office européen des brevets

(11) **EP 4 582 330 A1**

(12) **EUROPEAN PATENT APPLICATION**
published in accordance with Art. 153(4) EPC

(43) Date of publication:
**09.07.2025 Bulletin 2025/28**

(21) Application number: **22957316.7**

(22) Date of filing: **29.08.2022**

(51) International Patent Classification (IPC):
**B62D 5/04** *(2006.01)*

(52) Cooperative Patent Classification (CPC):
**B62D 5/0421;** B62D 3/08; B62D 5/0403

(86) International application number:
**PCT/JP2022/032450**

(87) International publication number:
**WO 2024/047712 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JTEKT Corporation
Kariya-shi, Aichi 448-8652 (JP)**

(72) Inventors:
• **TAKAGI, Kazuma
Kariya-shi, Aichi 448-8652 (JP)**
• **YAMAMOTO, Ryuta
Kariya-shi, Aichi 448-8652 (JP)**
• **MURAKAMI, Yuuya
Kariya-shi, Aichi 448-8652 (JP)**

• **OKADA, Kotaro
Kariya-shi, Aichi 448-8652 (JP)**
• **MAMEDA, Shizunobu
Kariya-shi, Aichi 448-8652 (JP)**
• **NISHIMURA, Toshiaki
Kariya-shi, Aichi 448-8652 (JP)**
• **TAI, Tsubasa
Kariya-shi, Aichi 448-8652 (JP)**
• **SUZUKI, Takashi
Kariya-shi, Aichi 448-8652 (JP)**
• **TAKEUCHI, Taiki
Kariya-shi, Aichi 448-8652 (JP)**

(74) Representative: **Winter, Brandl - Partnerschaft
mbB
Alois-Steinecker-Straße 22
85354 Freising (DE)**

(54) **STEERING DEVICE**

(57)    Asteering system (20) includes a shaft (24B2) configured to rotate in conjunction with steering of a steering wheel (26), a ball screw mechanism (48) configured to convert rotation of the shaft into rotation of an output shaft (44), and a speed reducer (25) configured to apply torque to the shaft. The ball screw mechanism includes a first housing (40), a ball screw shaft (41) connected to the shaft by intermeshing coupling, and first and second bearings (46, 47) that support the ball screw shaft. The speed reducer includes a second housing (50) and a third bearing (53) that supports the shaft. An outside diameter ($\varphi 1$) of the shaft is set so that a third center line (O3) passing through a center of a cross section of the third bearing is positioned on a radially outer side of a first center line (O1) passing through a center of a cross section of the first bearing or a second center line (O2) passing through a center of a cross section of the second bearing.

**(Cont. next page)**

EP 4 582 330 A1

Fig.2

$\phi$1

0

24A

24C

01
03

24
24D

23A

24E
24B
24B1
53
50A

25

50

51

24B2

51A

52

46

40A
50B

23

41B
41A

41

48

43

42

42B

REAR

44
45

FRONT

42A

45A

31

47

02

$\phi$2

## Description

TECHNICAL FIELD

The present disclosure relates to a steering system.

BACKGROUND ART

Hitherto, so-called cab-over vehicles such as freight vehicles in which a driver's seat is located forward of a front wheel axle often use an axle suspension in which right and left wheels are connected by an axle. The vehicles including the axle suspension often use a ball screw steering gearbox. The steering gearbox is mounted on, for example, a vehicle body frame.

An electric power steering system of Patent Document 1 includes a motor and a ball screw steering gearbox. The steering gearbox converts a rotational motion of a steering shaft into rotation of an output shaft that rotates in conjunction with steered wheels. The direction of the steered wheels is changed in conjunction with the rotation of the output shaft. The torque of the motor is transmitted to a ball screw shaft of the steering gearbox via a worm reducer. This assists steering of a steering wheel.

The steering shaft includes an input shaft, an output shaft, and a torsion bar. The input shaft and the output shaft are connected to each other via the torsion bar. Steering torque applied to the steering wheel is transmitted to the output shaft via the input shaft and the torsion bar. The torsion bar is twisted in response to the steering torque. The end of the output shaft opposite to the input shaft is connected to the end of the ball screw shaft.

Related Art Documents

Patent Documents

Patent Document 1: Chinese Patent Application Publication No. 111284556

SUMMARY OF THE INVENTION

Problem to be Solved by the Invention
The electric power steering system of Patent Document 1 has the following concern. That is, the output shaft and the ball screw shaft are coupled to each other by serration coupling. The serration coupling is a method of coupling a rotation shaft to a component having a fitting portion to which the rotation shaft is fitted. Serrated teeth provided on the outer circumferential surface of the rotation shaft and serrated grooves provided on the inner circumferential surface of the fitting portion are fitted together to restrict relative rotation between the rotation shaft and the component.
In the electric power steering system of Patent Document 1, serrated teeth extending in an axial direction are provided on the outer circumferential surface of the end of the output shaft coupled to the ball screw shaft. The end of the ball screw shaft to which the output shaft is coupled includes a fitting portion. Serrated grooves extending in the axial direction are provided on the inner circumferential surface of the fitting portion. The serrated teeth and the serrated grooves are fitted together by press-fitting the end of the output shaft to the fitting portion.
However, there is a slight amount of backlash between the end of the output shaft and the fitting portion of the ball screw shaft in a rotation direction or a radial direction thereof. Along with long-term use of the electric power steering system, the amount of backlash between the end of the output shaft and the fitting portion of the ball screw shaft may gradually increase. In this case, there is a concern that the output shaft may tilt due to the backlash between the end of the output shaft and the fitting portion of the ball screw shaft.

Means for Solving the Problem

A steering system according to one embodiment of the present disclosure includes a shaft configured to rotate in conjunction with steering of a steering wheel of a vehicle, a ball screw mechanism configured to convert rotation of the shaft into rotation of an output shaft configured to operate in conjunction with a steered wheel, and a speed reducer configured to apply torque to the shaft. The ball screw mechanism includes a first housing, a ball screw shaft housed inside the first housing, the ball screw shaft including a first end and a second end, and being connected to the shaft to be rotatable together by intermeshing coupling between the first end and the shaft, a first bearing that supports the first end of the ball screw shaft so that the ball screw shaft is rotatable relative to the first housing, and a second bearing that supports the second end of the ball screw shaft so that the ball screw shaft is rotatable relative to the first housing. The speed reducer includes a second housing that is connected to the first housing in an axial direction and into which the shaft is inserted in the axial direction, and a third bearing that supports the shaft so that the shaft is rotatable relative to the second housing. A line passing through a center of a cross section obtained by cutting the first bearing in the axial direction and parallel to a central axis of the shaft is a first center line. A line passing through a center of a cross section obtained by cutting the second bearing in the axial direction and parallel to the central axis of the shaft is a second center line. A line passing through a center of a cross section obtained by cutting the third bearing in the axial direction and parallel to the central axis of the shaft is a third center line. An outside diameter of the shaft is set so that the third center line is positioned on an outer side of the first center line or the second center line in a radial direction about the central axis of the shaft.

BRIEF DESCRIPTION OF THE DRAWINGS

[FIG. 1] FIG. 1 is a schematic diagram of a steering system according to one embodiment.

[FIG. 2] FIG. 2 is a sectional view of a steering gearbox in FIG. 1.

[FIG. 3A] FIG. 3A is a sectional view showing a first comparative example of an output shaft in FIG. 2.

[FIG. 3B] FIG. 3B is a sectional view showing a second comparative example of the output shaft in FIG. 2.

[FIG. 4A] FIG. 4A is a sectional view showing tilt in the first comparative example of the output shaft in FIG. 2.

[FIG. 4B] FIG. 4B is a sectional view showing tilt in the second comparative example of the output shaft in FIG. 2.

MODES FOR CARRYING OUT THE INVENTION

A steering system according to one embodiment will be described. The steering system is, for example, an electric power steering system.

<Overall Configuration>

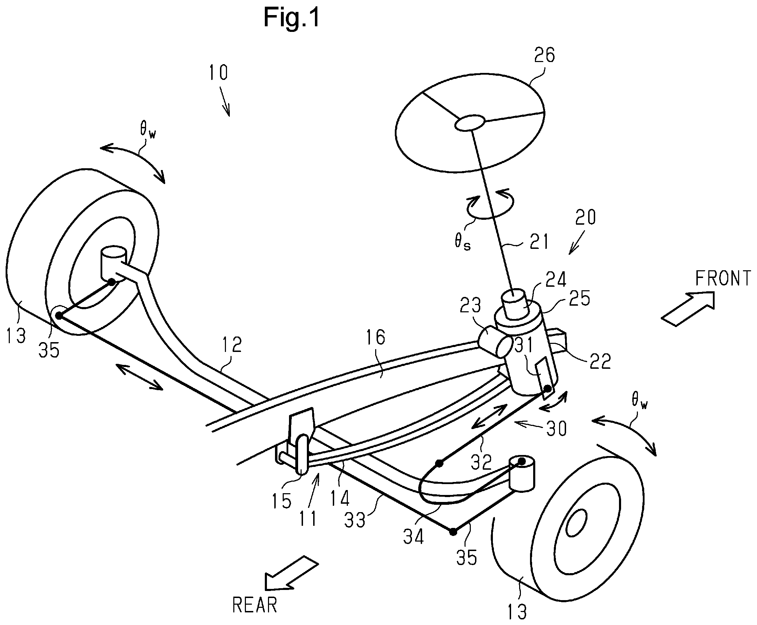

As shown in FIG. 1, a steering system 20 is mounted on, for example, a cab-over vehicle 10. The vehicle 10 includes an axle suspension 11. The suspension 11 supports a front axle 12. Steered wheels 13 that are front wheels are connected to both ends of the front axle 12. The suspension 11 includes a leaf spring 14. As an example, the leaf spring 14 is positioned above the front axle 12. The leaf spring 14 extends in a front-rear direction of the vehicle. Both ends of the leaf spring 14 are attached to a vehicle body frame 16 via support members 15 such as shackles.

The steering system 20 includes a steering shaft 21, a steering gearbox 22, a motor 23, a torque sensor 24, and a speed reducer 25. The steering shaft 21 and the steering gearbox 22 constitute a steering mechanism of the vehicle 10. A first end of the steering shaft 21 is connected to a steering wheel 26. A second end of the steering shaft 21 is connected to the steering gearbox 22 via the torque sensor 24 and the speed reducer 25. The motor 23 is connected to the steering gearbox 22 via the speed reducer 25. The steering gearbox 22 is, for example, of an RBS type (recirculating ball screw type).

The steering gearbox 22 is connected to the steered wheels 13 via a link mechanism 30. The link mechanism 30 includes a pitman arm 31, a drag link 32, and a tie rod 33. The base end of the pitman arm 31 is connected to the side of the steering gearbox 22. The pitman arm 31 is swingable about its base end in the front-rear direction of the vehicle. A first end of the drag link 32 is rotatably connected to the distal end of the pitman arm 31. A second end of the drag link 32 is rotatably connected to a knuckle arm 34 of the right steered wheel 13. Both ends of the tie rod 33 are connected to the right and left steered wheels 13 via tie rod arms 35.

The rotation of the steering wheel 26 is transmitted to the steering gearbox 22 via the steering shaft 21. The steering gearbox 22 converts a rotational motion of the steering shaft 21 into a swinging motion of the pitman arm 31. The swinging motion of the pitman arm 31 drives the drag link 32 in the front-rear direction of the vehicle. The knuckle arm 34 swings in conjunction with the drag link 32, thereby turning the steered wheels 13.

The motor 23 generates torque in the same direction as the steering direction of the steering wheel 26 in response to steering torque detected by the torque sensor 24. The torque of the motor 23 is transmitted to the steering shaft 21 via the speed reducer 25. That is, the speed reducer 25 is configured to apply torque to the steering shaft 21. The torque in the same direction as the steering direction is applied to the steering shaft 21, thereby assisting the steering of the steering wheel 26.

<Configuration of Steering Gearbox 22>

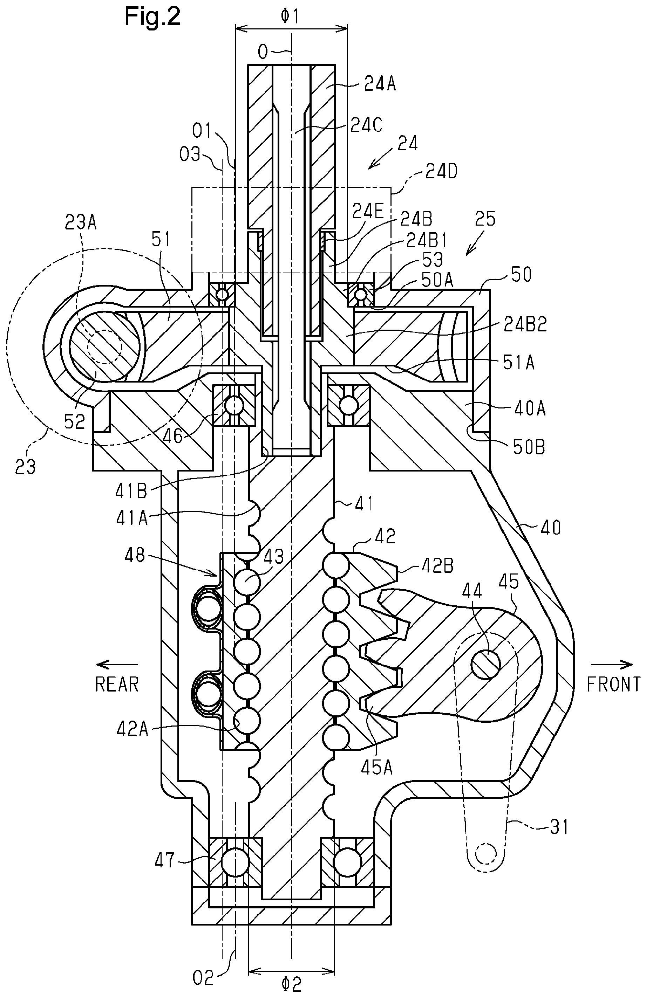

As shown in FIG. 2, the steering gearbox 22 includes a first housing 40. A ball screw shaft 41, a ball screw nut 42, a plurality of balls 43, a sector shaft 44, and a sector gear 45 are provided inside the first housing 40.

When the steering gearbox 22 is mounted on the vehicle 10, the ball screw shaft 41 is maintained in a posture in which it extends in the vertical direction with respect to the vehicle 10. The ball screw shaft 41 is supported via a first bearing 46 and a second bearing 47 to be rotatable relative to the first housing 40. The first bearing 46 and the second bearing 47 are, for example, the same products.

The first bearing 46 supports a first end of the ball screw shaft 41. The first end is an end of the ball screw shaft 41 oriented upward of the vehicle 10 when the steering gearbox 22 is mounted on the vehicle 10. The first end of the ball screw shaft 41 is connected to the steering shaft 21 via the torque sensor 24.

The second bearing 47 supports a second end of the ball screw shaft 41. The second end is an end of the ball screw shaft 41 opposite to the first end. That is, the second end is an end of the ball screw shaft 41 oriented downward of the vehicle 10 when the steering gearbox 22 is mounted on the vehicle 10. The second end faces an end wall of the first housing 40.

The ball screw shaft 41 has a first groove 41A. The first groove 41A is a helical groove provided on the outer circumferential surface of the ball screw shaft 41. A threaded portion is formed by providing the first groove 41A. The ball screw shaft 41 has a connection hole 41B at the first end. The connection hole 41B extends in an axial direction. A plurality of serration grooves extending in the axial direction is provided on the inner circumferential surface of the connection hole 41B. The serration grooves are disposed at equal intervals in a circumferential direction of the connection hole 41B. The serration groove has, for example, a triangular shape as viewed in the axial direction.

The ball screw nut 42 has a tubular shape and has a second groove 42A. The second groove 42A is a helical groove provided on the inner circumferential surface of the ball screw nut 42. The second groove 42A faces the first groove 41A in a radial direction. The ball screw nut 42 engages with the ball screw shaft 41 via the plurality of balls 43. A helical space surrounded by the first groove 41A and the second groove 42A functions as a rolling path along which the balls 43 roll. The ball screw shaft 41, the ball screw nut 42, and the balls 43 constitute a ball screw mechanism 48.

The ball screw nut 42 includes a plurality of rack teeth 42B. The rack teeth 42B are provided on the outer circumferential surface of the ball screw nut 42. The rack teeth 42B are arranged in an axial direction of the ball screw nut 42.

The sector shaft 44 extends in a direction orthogonal to the axis of the ball screw nut 42 (direction orthogonal to the drawing sheet of FIG. 2). The sector shaft 44 is supported via a bearing that is not shown to be rotatable relative to the first housing 40. The sector shaft 44 has an outer end exposed to the outside through the first housing 40. The base end of the pitman arm 31 is fixed to the outer end of the sector shaft 44. The sector shaft 44 is an output shaft of the steering gearbox 22 and operates in conjunction with the steered wheels 13.

The sector gear 45 is provided to the sector shaft 44 to be rotatable together. The sector gear 45 is a gear having a sector shape and has a plurality of teeth 45A. The teeth 45A of the sector gear 45 mesh with the rack teeth 42B of the ball screw nut 42.

The rotation of the steering wheel 26 is transmitted to the ball screw shaft 41 via the steering shaft 21 and the torque sensor 24. As the ball screw shaft 41 rotates, the ball screw nut 42 moves in the axial direction relative to the ball screw shaft 41. Therefore, the sector gear 45 swings about the sector shaft 44. When the sector shaft 44 rotates as the sector gear 45 swings, the pitman arm 31 swings about the sector shaft 44.

<Configuration of Torque Sensor 24>

As shown in FIG. 2, the torque sensor 24 includes an input shaft 24A, an output shaft 24B, a torsion bar 24C, and a detector 24D. The input shaft 24A and the output shaft 24B are connected to each other via the torsion bar 24C. The input shaft 24A and the output shaft 24B are each a hollow cylinder.

A first end of the input shaft 24A is connected to the steering shaft 21. A second end of the input shaft 24A is inserted into a first end of the output shaft 24B. The input shaft 24A is kept out of contact with the output shaft 24B. A plain bearing 24E is interposed between the outer circumferential surface of the input shaft 24A and the inner circumferential surface of the output shaft 24B. The input shaft 24A and the output shaft 24B can rotate relative to each other via the plain bearing 24E.

A second end of the output shaft 24B is fitted to the connection hole 41B through an end wall of the first housing 40. A plurality of serration teeth extending in the axial direction is provided on the outer circumferential surface of the second end of the output shaft 24B. The serration teeth are disposed at equal intervals in the circumferential direction. The serration tooth has, for example, a triangular shape as viewed in the axial direction. The serration teeth of the output shaft 24B and the serration grooves of the connection hole 41B are fitted together. Serration coupling between the output shaft 24B and the ball screw shaft 41 restricts relative rotation between the output shaft 24B and the ball screw shaft 41. The output shaft 24B is rotatable together with the ball screw shaft 41.

Although the coupling structure using so-called triangular tooth serrations has been exemplified, any structure may be used as long as it is intermeshing coupling between an inner member with external teeth and an outer member with internal teeth, and it may also be square splines or involute splines.

The second end of the output shaft 24B is an end of the output shaft 24B positioned opposite to a bearing attachment portion 24B1 across a worm wheel attachment portion 24B2. The second end of the output shaft 24B is indirectly supported by the first bearing 46 via a peripheral wall of the connection hole 41B while being fitted to the connection hole 41B in the axial direction.

The output shaft 24B includes the bearing attachment portion 24B1 and the worm wheel attachment portion 24B2. The bearing attachment portion 24B1 and the worm wheel attachment portion 24B2 are positioned between the first end and the second end of the output shaft 24B. The outside diameter of the bearing attachment portion 24B1 is larger than the outside diameters of the other portions of the output shaft 24B except for the worm wheel attachment portion 24B2. The outside diameter of the worm wheel attachment portion 24B2 is slightly larger than the outside diameter of the bearing attachment portion 24B1.

The bearing attachment portion 24B1 and the worm wheel attachment portion 24B2 are adjacent to each other in the axial direction. The bearing attachment portion 24B1 is positioned opposite to the ball screw shaft 41 across the worm wheel attachment portion 24B2. The bearing attachment portion 24B1 is a portion of the output shaft 24B positioned above the worm wheel attachment portion 24B2 when the steering gearbox 22 is mounted on the vehicle 10. The worm wheel attachment portion 24B2 is a portion of the output shaft 24B positioned below the bearing attachment portion 24B1 when the steering gearbox 22 is mounted on the vehicle 10.

The torsion bar 24C is inserted into the input shaft 24A and the output shaft 24B. A first end of the torsion bar 24C is fixed to the inner circumferential surface of the first end of the input shaft 24A. A second end of the torsion bar 24C is fixed to the inner circumferential surface of the second end of the output shaft 24B. A clearance is present between the inner circumferential surface of the output shaft 24B and the outer circumferential surface of a portion of the torsion bar 24C between the first end and the second end.

Steering torque applied to the steering wheel 26 is transmitted to the input shaft 24A via the steering shaft 21. Therefore, the input shaft 24A rotates. The rotation of the input shaft 24A is transmitted to the output shaft 24B via the torsion bar 24C. Therefore, the output shaft 24B rotates. The output shaft 24B corresponds to a shaft that rotates in conjunction with the steering of the steering wheel 26. The torsion bar 24C is twisted in response to the steering torque.

The detector 24D is provided, for example, to surround the outer circumferential surface of the input shaft 24A. The detector 24D detects steering torque based on the amount of twist of the torsion bar 24C.

<Configuration of Speed Reducer 25>

As shown in FIG. 2, the speed reducer 25 includes a second housing 50. The second housing 50 is connected to the first housing 40 of the steering gearbox 22. The second housing 50 is connected to a portion of the first housing 40 that is closer to the first bearing 46 than to the second bearing 47 in the axial direction.

The first housing 40 includes a tubular connection portion 40A extending in the axial direction. The connection portion 40A is provided at the end of the first housing 40 oriented upward of the vehicle 10 when the steering gearbox 22 is mounted on the vehicle 10. The connection portion 40A is closer to the first bearing 46 than to the second bearing 47 in the axial direction.

The second housing 50 has a tubular shape and includes an end wall at a first end in the axial direction. The first end is an end of the second housing 50 oriented upward of the vehicle 10 when the steering gearbox 22 is mounted on the vehicle 10. The end wall has a first opening 50A. The input shaft 24A and the output shaft 24B extend through the first opening 50A in the axial direction in a non-contact state. The second housing 50 has a second opening 50B at a second end opposite to the first end. The second end is an end of the second housing 50 oriented downward of the vehicle 10 when the steering gearbox 22 is mounted on the vehicle 10.

The connection portion 40A of the first housing 40 and the second opening 50B of the second housing 50 are fitted together in the axial direction. Specifically, the inner circumferential surface of the second opening 50B is fitted to the outer circumferential surface of the connection portion 40A. There is no step between the outer circumferential surface of the first housing 40 and the outer circumferential surface of the second housing 50. The inside of the first housing 40 and the inside of the second housing 50 communicate with each other.

The motor 23 is attached to the outside of the second housing 50. An output shaft 23A of the motor 23 extends, for example, in a direction orthogonal to the axis of the ball screw shaft 41 and parallel to the axis of the sector shaft 44. The output shaft 23A extends through the second housing 50 and is inserted into the second housing 50.

A worm wheel 51 and a worm 52 are housed inside the second housing 50. The output shaft 24B extends through the second housing 50 in the axial direction.

The output shaft 24B is supported via a third bearing 53 to be rotatable relative to the inner circumferential surface of the first opening 50A of the second housing 50. The third bearing 53 is attached to the outer circumferential surface of the bearing attachment portion 24B1 of the output shaft 24B. The third bearing 53 is, for example, a ball bearing. The fitting between an inner ring of the third bearing 53 and the outer circumferential surface of the bearing attachment portion 24B1 is clearance fit. That is, the bore diameter of the inner ring of the third bearing 53 is slightly larger than the outside diameter of the bearing attachment portion 24B1. The fitting between an outer ring of the third bearing 53 and the inner circumferential surface of the first opening 50A is clearance fit. That is, the outside diameter of the outer ring of the third bearing 53 is slightly smaller than the bore diameter of the first opening 50A.

The worm wheel 51 has a tubular shape and is attached to the outer circumferential surface of the worm wheel attachment portion 24B2 of the output shaft 24B. The worm wheel 51 is rotatable together with the output shaft 24B. The first end face of the worm wheel 51 and the third bearing 53 are spaced away from each other in the axial direction. The second end face of the worm wheel 51 and the connection portion 40A of the first housing 40 are spaced away from each other in the axial direction. The second end face is an end face of the worm wheel 51 opposite to the first end face. The second end face of the worm wheel 51 has a recess 51A. The recess 51A has, for example, a truncated cone shape. The recess 51A is a region including the center of the second end face as viewed in the axial direction, and is provided in a region from the center of the second end face to the vicinity of the root. The recess 51A is open opposite to the bearing attachment portion 24B1 across the worm wheel attachment portion 24B2. A portion of the connection portion 40A of the first housing 40 is inserted into the recess 51A.

The worm 52 is connected to the output shaft 23A of the motor 23 to be rotatable together. The axis of the output shaft 23A and the axis of the worm 52 coincide with each other. The worm 52 meshes with the worm wheel 51. The shaft angle between the worm 52 and the worm wheel 51 is, for example, 90°.

The torque of the motor 23 is transmitted to the ball screw shaft 41 via the speed reducer 25. The torque in the same direction as the steering direction of the steering wheel 26 is applied to the ball screw shaft 41, thereby assisting the steering of the steering wheel 26.

<Suppression of Tilt of Output Shaft 24B>

As described above, the output shaft 24B and the ball screw shaft 41 are coupled to each other in the axial direction via the serration teeth and the serration grooves. In this case, there is a slight amount of backlash between the output shaft 24B and the ball screw shaft 41 in a rotation direction or a radial direction thereof due to the structure. Further, the fitting between the outer ring of the third bearing 53 and the first opening 50A is clearance fit. Therefore, there is a concern that the output shaft 24B may tilt about a fulcrum that is the connection point to the ball screw shaft 41 depending on the clearance between the outer circumferential surface of the outer ring of the third bearing 53 and the inner circumferential surface of the first opening 50A.

In the present embodiment, the following configuration is adopted to suppress the tilt of the output shaft 24B.

As shown in FIG. 2, a line passing through the center of a cross section obtained by cutting the first bearing 46 in the axial direction and parallel to a central axis O of the output shaft 24B is a first center line O1. A line passing through the center of a cross section obtained by cutting the second bearing 47 in the axial direction and parallel to the central axis O of the output shaft 24B is a second center line O2. A line passing through the center of a cross section obtained by cutting the third bearing 53 in the axial direction and parallel to the central axis O of the output shaft 24B is a third center line O3. An outside diameter $\varphi1$ of the bearing attachment portion 24B1 of the output shaft 24B is set so that the third center line O3 is positioned on an outer side of the first center line O1 in the radial direction about the central axis O of the output shaft 24B. In other words, the outside diameter $\varphi1$ of the bearing attachment portion 24B1 of the output shaft 24B is set so that a radial distance from the central axis O of the output shaft 24B to the third center line O3 is larger than a radial distance from the central axis O of the output shaft 24B to the first center line O1. In the following description, a "radially outer side" and a "radially inner side" mean an outer side and an inner side in the radial direction about the central axis O of the output shaft 24B, respectively.

With this configuration, the tilt of the output shaft 24B can be suppressed compared to, for example, the case where the outside diameter $\varphi1$ of the bearing attachment portion 24B1 of the output shaft 24B is set so that the third center line O3 is positioned on the radially inner side of the first center line O1. This is because the tilt amount of the output shaft 24B decreases as the outside diameter $\varphi1$ of the bearing attachment portion 24B1 increases.

Although all the first bearing 46, the second bearing 47, and the third bearing 53 are ball bearings, the third bearing 53 has a smaller ball diameter than the other bearings 46, 47. Thus, the bore diameter of the third bearing 53 can be increased, and the outside diameter $\varphi1$ of the bearing attachment portion 24B1 can further be increased.

The third center line O3 is positioned on the radially outer side of the second center line O2. The first bearing 46 and the second bearing 47 are the same products and are positioned coaxially. Therefore, the second center line O2 coincides with the first center line O1. Thus, when the third center line O3 is positioned on the radially outer side of the first center line O1, the third center line O3 is naturally positioned on the radially outer side of the second center line O2.

The outside diameter $\varphi1$ of the bearing attachment portion 24B1 is larger than an outside diameter $\varphi2$ of the ball screw shaft 41. The outside diameter $\varphi2$ is an outside diameter of a portion of the ball screw shaft 41 other than the portions supported by the first bearing 46 and the second bearing 47.

<Relationship between Outside Diameter and Tilt of Output Shaft 24B>

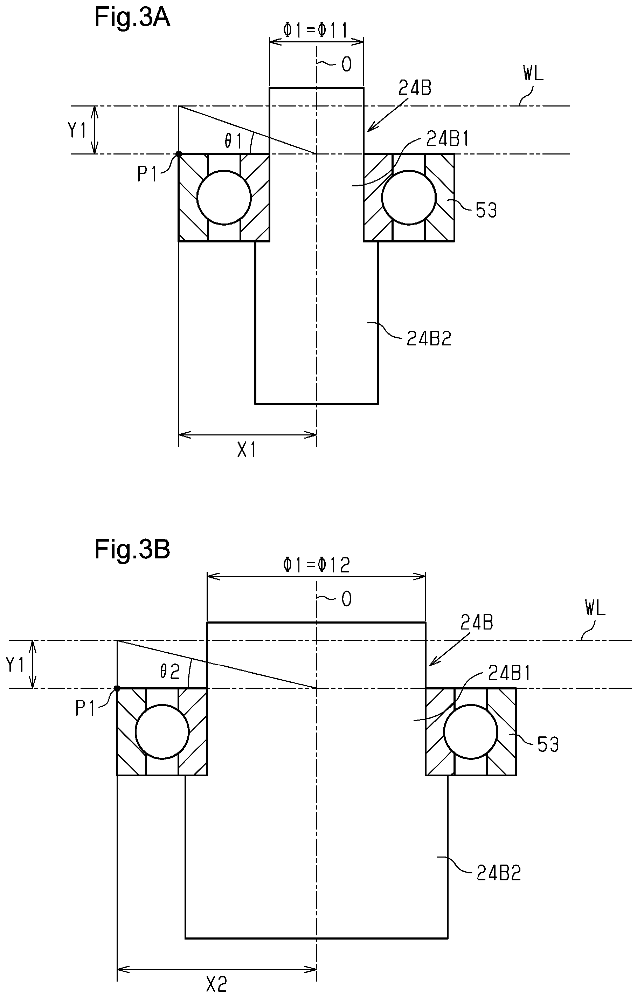

A first comparative example of the output shaft 24B shown in FIG. 3A and a second comparative example of the output shaft 24B shown in FIG. 3B will be considered.

As shown in FIG. 3A, in the first comparative example, the outside diameter $\varphi1$ of the bearing attachment portion 24B1 is set to a first outside diameter $\varphi11$. It is assumed that there is an imaginary wall WL that faces a first end face of the third bearing 53 in the axial direction. The first end face is an end face of the third bearing 53 opposite to the worm wheel attachment portion 24B2, and is oriented upward of the vehicle 10 when the steering gearbox 22 is mounted on the vehicle 10.

The first end face of the third bearing 53 and the imaginary wall WL are spaced away from each other in the axial direction by a distance Y1. The central axis O of the output shaft 24B and the outer circumferential surface of the outer ring of the third bearing 53 are spaced away from each other in the radial direction by a distance X1. The output shaft 24B can maximally tilt up to a position where a corner P1 of the outer ring of the third bearing 53 comes into contact with the imaginary wall WL. The corner P1 is a corner formed by the first end face of the third bearing 53 and the outer circumferential surface of the outer ring of the third bearing 53. The tilt amount of the output shaft 24B is equal to the tilt amount of the first end face of the third bearing 53. Therefore, a tilt amount $\theta1$ in the first comparative example of the output shaft 24B is represented by the following expression (1).

$$\theta1 = \tan^{-1}(Y1/X1) \ldots (1)$$

As shown in FIG. 3B, in the second comparative example, the outside diameter $\varphi1$ of the bearing attachment portion 24B1 is set to a second outside diameter $\varphi12$. The second outside diameter $\varphi12$ is larger than the first outside diameter $\varphi11$. Similarly to the first comparative example, it is assumed that there is an imaginary wall WL that faces the first end face of the third bearing 53 in the axial direction. Similarly to the first comparative example, the first end face of the third bearing 53 and the imaginary wall WL are spaced away from each other in the axial direction by the distance Y1. The central axis O of the output shaft 24B and the outer circumferential surface of the outer ring of the third bearing 53 are spaced away from each other in the radial direction by a distance X2. The distance X2 is larger than the distance X1 in the first comparative example. A tilt amount $\theta2$ of the output shaft 24B in the second comparative example is represented by the following expression (2).

$$\theta2 = \tan^{-1}(Y1/X2) \ldots (2)$$

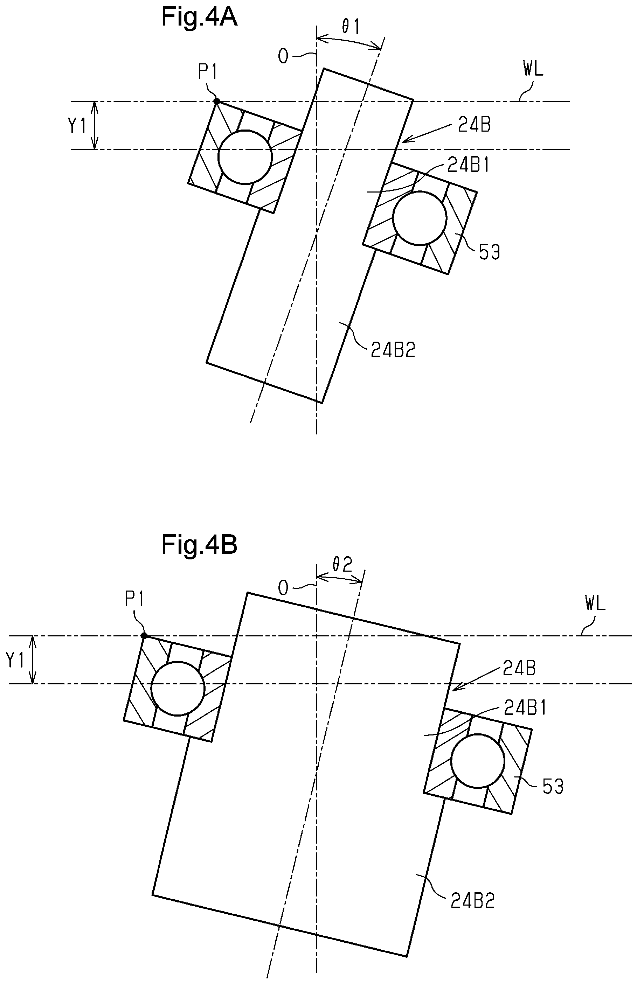

As described above, the distance X2 in the second comparative example of the output shaft 24B is larger than the distance X1 in the first comparative example of the output shaft 24B. Therefore, as shown in FIGS. 4A and 4B, the tilt amount $\theta2$ in the second comparative example of the output shaft 24B is smaller than the tilt amount $\theta1$ in the first comparative example of the output shaft 24B.

Thus, when the clearance distance between the outer circumferential surface of the outer ring of the third bearing 53 and the inner circumferential surface of the first opening 50A is the same, the tilt amount of the output shaft 24B decreases as the outside diameter $\varphi1$ of the bearing attachment portion 24B1 increases.

<Effects of Embodiment>

The present embodiment has the following effects.

(1) The outside diameter of the output shaft 24B is set so that the third center line O3 passing through the center of the cross section obtained by cutting the third bearing 53 in the axial direction is positioned on the radially outer side of the first center line O1 passing through the center of the cross section obtained by cutting the first bearing 46 in the axial direction. The outside diameter is the outside diameter $\varphi1$ of the bearing attachment portion 24B1. In this way, the tilt of the output shaft 24B can be suppressed compared to, for example, the case where the outside diameter $\varphi1$ of the bearing attachment portion 24B1 is set so that the third center line O3 is positioned on the radially inner side of the first center line O1. This is because the tilt amount of the output shaft 24B decreases as the outside diameter $\varphi1$ of the bearing attachment portion 24B1 increases. The first center line O1 is a reference for setting the outside diameter $\varphi1$ of the bearing attachment portion 24B1.

(2) The outside diameter $\varphi1$ of the bearing attachment portion 24B1 when the first center line O1 is positioned on the radially outer side of the second center line O2 is larger than, for example, the outside diameter $\varphi1$ of the bearing attachment portion 24B1 when the first center line O1 is positioned on the radially inner side of the second center line O2. A bearing having a larger bore diameter as the outside diameter $\varphi1$ of the bearing attachment portion 24B1 increases is used as the third bearing 53. As the bore diameter of the third bearing 53 increases, the number of balls in the third bearing 53 increases. As the number of balls increases, the load on each ball decreases. Therefore, the useful life of the third bearing 53 can be secured.

(3) The output shaft 24B is supported via the single third bearing 53 to be rotatable relative to the inner circumferential surface of the second housing 50. That is, the output shaft 24B only needs to be provided with the single bearing attachment portion 24B1. Therefore, the axial length of the output shaft 24B can be reduced compared to, for example, the case where the output shaft 24B is supported by two bearings spaced away from each other in the axial direction. Thus, it is possible to reduce the axial length of the speed reducer 25 and furthermore the total axial length of the speed reducer 25 and the steering gearbox 22.

In the case where the output shaft 24B is supported by two bearings, the output shaft 24B needs to be provided with two bearing attachment portions 24B1 spaced away from each other in the axial direction. Therefore, the axial length of the output shaft 24B increases. Thus, the axial length of the speed reducer 25 and furthermore the total axial length of the speed reducer 25 and the steering gearbox 22 may increase.

(4) The bearing attachment portion 24B1 is positioned opposite to the ball screw shaft 41 across the worm wheel attachment portion 24B2. The ball screw shaft 41 has the connection hole 41B extending in the axial direction at the first end. The end of the output shaft 24B positioned opposite to the bearing attachment portion 24B1 across the worm wheel attachment portion 24B2 is indirectly supported by the first bearing 46 via the peripheral wall of the connection hole 41B while being fitted to the connection hole 41B in the axial direction. Therefore, the output shaft 24B can stably be supported by the third bearing 53 and the first bearing 46.

(5) The first housing 40 and the second housing 50 are fitted together in the axial direction to have an overlapping portion in a direction orthogonal to the axial direction. Therefore, it is possible to reduce the total axial length of the speed reducer 25 and the steering gearbox 22 compared to the case where the first housing 40 and the second housing 50 are connected, for example, by abutting against each other in the axial direction.

(6) The second end face of the worm wheel 51 has the recess 51A. A portion of the first housing 40 is inserted into the recess 51A in the axial direction. The portion of the first housing 40 is a portion of the connection portion 40A. Therefore, it is possible to reduce the total axial length of the speed reducer 25 and the steering gearbox 22 compared to the case where the second end face of the worm wheel 51 is, for example, a flat face without the recess 51A.

(7) With the above configurations (5), (6), the axial distance between the first bearing 46 and the third bearing 53 can further be reduced. Further, the first bearing 46 can be positioned in correspondence with the axial position of the second end of the output shaft 24B.

(8) Since the total axial length of the speed reducer 25 and the steering gearbox 22 is further reduced, the speed reducer 25 and the steering gearbox 22 can easily be mounted on the vehicle.

<Other Embodiments>

The present embodiment may be modified as follows.

- The fitting relationship between the first housing 40 and the second housing 50 may be reversed. That is, the outer circumferential surface of the second housing 50 may be fitted to the inner circumferential surface of the first housing 40 in the axial direction. Even in this way, the first housing 40 and the second housing 50 are fitted together in the axial direction to have an overlapping portion in a direction orthogonal to the axis.
- The first center line O1 need not be positioned on the radially outer side of the third center line O3. In the case where the first bearing 46 and the second bearing 47 are not the same products, there is a possibility that the third center line O3 and the second center line O2 do not coincide with each other. For example, the third center line O3 may be positioned on the radially outer side or the radially inner side of the second center line O2. Even in this case, it is appropriate to set the outside diameter $\varphi 1$ of the bearing attachment portion 24B1 so that the first center line O1 is positioned on the radially outer side of the second center line O2.

In the case where the third center line O3 is positioned on the radially outer side of the second center line O2, the outside diameter $\varphi 1$ of the bearing attachment portion 24B1 may be set so that the first center line O1 is positioned on the radially outer side of the third center line O3. By setting the outside diameter $\varphi$ of the bearing attachment portion 24B1 to a larger value, it is possible to further suppress the tilt of the output shaft 24B. The third center line O3 may be used as a reference for setting the outside diameter $\varphi 1$ of the bearing attachment portion 24B1.

- The first housing and the second housing need not be fitted together in the axial direction to have an overlapping portion in a direction orthogonal to the axial direction. For example, the first housing 40 and the second housing 50 may be connected to each other by abutting against each other in the axial direction.
- A portion of the first housing 40 need not be inserted into the recess 51A of the worm wheel 51 in the axial direction. In this case, a configuration in which the recess 51A is omitted may be adopted as that of the worm wheel 51. The second end face of the worm wheel 51 is provided, for example, as a flat face.
- The axial position of the first bearing 46 and the axial position of the second end of the output shaft 42B need not correspond to each other. In this case, the output shaft 24B may be supported by two bearings spaced away from each other in the axial direction. The first bearing 46 may support the ball screw shaft 41 at a position offset in the axial direction from the second end of the output shaft 42B.
- The outside diameter of the bearing attachment portion 24B1 and the outside diameter of the worm wheel attachment portion 24B2 may be the same. Further, the outside diameter of the output shaft 24B may be constant over its entire length. Even in this case, the outside diameter of the output shaft 24B is set so that the first center line O1 is positioned on the radially outer side of the second center line O2. Thus, it is possible to suppress the tilt of the output shaft 24B.
- The position of the torque sensor 24 may be changed as appropriate. For example, the torque sensor 24 may be provided midway along the steering shaft 21. In this case, a configuration including a shaft similar to the output shaft 24B may be adopted as that of the speed reducer 25. The steering shaft 21 is connected to the ball screw shaft 41 via the shaft. The shaft rotates in conjunction with the steering of the steering wheel 26.

**Claims**

1.   A steering system comprising:

a shaft configured to rotate in conjunction with steering of a steering wheel of a vehicle;

a ball screw mechanism configured to convert rotation of the shaft into rotation of an output shaft configured to operate in conjunction with a steered wheel; and
a speed reducer configured to apply torque to the shaft, wherein
the ball screw mechanism includes:

a first housing;
a ball screw shaft housed inside the first housing, the ball screw shaft including a first end and a second end, and being connected to the shaft to be rotatable together by intermeshing coupling between the first end and the shaft;
a first bearing that supports the first end of the ball screw shaft so that the ball screw shaft is rotatable relative to the first housing; and
a second bearing that supports the second end of the ball screw shaft so that the ball screw shaft is rotatable relative to the first housing,

the speed reducer includes a second housing that is connected to the first housing in an axial direction and into which the shaft is inserted in the axial direction, and a third bearing that supports the shaft so that the shaft is rotatable relative to the second housing,
a line passing through a center of a cross section obtained by cutting the first bearing in the axial direction and parallel to a central axis of the shaft is a first center line,
a line passing through a center of a cross section obtained by cutting the second bearing in the axial direction and parallel to the central axis of the shaft is a second center line,
a line passing through a center of a cross section obtained by cutting the third bearing in the axial direction and parallel to the central axis of the shaft is a third center line, and
an outside diameter of the shaft is set so that the third center line is positioned on an outer side of the first center line or the second center line in a radial direction about the central axis of the shaft.

2. The steering system according to claim 1, wherein

the speed reducer includes, inside the second housing, a worm wheel attached to an outer circumferential surface of the shaft, and a worm meshing with the worm wheel,
the shaft includes a bearing attachment portion to which the third bearing is attached, and a worm wheel attachment portion that is adjacent to the bearing attachment portion in the axial direction and to which the worm wheel is attached, and
an outside diameter of the bearing attachment portion is set so that the third center line is positioned on the outer side of the first center line or the second center line in the radial direction about the central axis of the shaft.

3. The steering system according to claim 2, wherein

the bearing attachment portion is positioned opposite to the ball screw shaft across the worm wheel attachment portion,
the ball screw shaft has a connection hole extending in the axial direction at the first end, and
an end of the shaft positioned opposite to the bearing attachment portion across the worm wheel attachment portion is indirectly supported by the first bearing via a peripheral wall of the connection hole while being fitted to the connection hole in the axial direction.

4. The steering system according to claim 3, wherein

the worm wheel has a recess that is open opposite to the bearing attachment portion across the worm wheel attachment portion, and
a portion of the first housing is inserted into the recess in the axial direction.

5. The steering system according to any one of claims 1 to 4, wherein the first housing and the second housing are fitted together in the axial direction to have an overlapping portion in a direction orthogonal to the axial direction.

6. The steering system according to any one of claims 1 to 4, further comprising

a torque sensor configured to detect steering torque applied to the steering wheel, wherein the torque sensor includes an input shaft to which the steering torque is transmitted, an output shaft provided to be rotatable relative to the input shaft, and a torsion bar connecting the input shaft and the output shaft, and
the shaft is the output shaft.

Fig.1

Fig.2

Fig.3A

$\phi 1 = \phi 11$

~ 0

Y1

P1

θ1

24B

24B1

53

24B2

X1

WL

Fig.3B

$\phi 1 = \phi 12$

~ 0

Y1

P1

θ2

24B

24B1

53

24B2

X2

WL

Fig.4A

Fig.4B

14

## INTERNATIONAL SEARCH REPORT

| International application No. |
| --- |
| **PCT/JP2022/032450** |

**A. CLASSIFICATION OF SUBJECT MATTER**

**_B62D 5/04_**(2006.01)i
FI: B62D5/04

According to International Patent Classification (IPC) or to both national classification and IPC

**B. FIELDS SEARCHED**

Minimum documentation searched (classification system followed by classification symbols)

B62D5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-038383 A (HITACHI AUTOMOTIVE SYSTEMS LTD) 14 March 2019 (2019-03-14) entire text, all drawings | 1-6 |
| A | JP 2005-306317 A (KOYO SEIKO CO LTD) 04 November 2005 (2005-11-04) entire text, all drawings | 1-6 |
| A | JP 2011-064327 A (NSK LTD) 31 March 2011 (2011-03-31) entire text, all drawings | 1-6 |
| A | JP 2009-190477 A (JTEKT CORP) 27 August 2009 (2009-08-27) entire text, all drawings | 1-6 |
| A | JP 2021-062712 A (JTEKT CORP) 22 April 2021 (2021-04-22) entire text, all drawings | 1-6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 November 2022** | **08 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/032450**

| Patent document cited in search report | | | Publication date (day/month/year) | Patent family member(s) | | | Publication date (day/month/year) |
|---|---|---|---|---|---|---|---|
| JP | 2019-038383 | A | 14 March 2019 | US | 2020/0377147 | A1 | |
| | | | | entire text, all drawings | | | |
| | | | | WO | 2019/039183 | A1 | |
| | | | | CN | 111051183 | A | |
| JP | 2005-306317 | A | 04 November 2005 | (Family: none) | | | |
| JP | 2011-064327 | A | 31 March 2011 | US | 2006/0117889 | A1 | |
| | | | | entire text, all drawings | | | |
| | | | | WO | 2005/001309 | A1 | |
| | | | | EP | 1637769 | A1 | |
| | | | | CN | 1738983 | A | |
| JP | 2009-190477 | A | 27 August 2009 | (Family: none) | | | |
| JP | 2021-062712 | A | 22 April 2021 | US | 2021/0107615 | A1 | |
| | | | | entire text, all drawings | | | |
| | | | | EP | 3805090 | A1 | |
| | | | | CN | 112644677 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111284556